# EUROPÄISCHE PATENTSCHRIFT

(11) **EP 1 395 483 B1**
(45) Veröffentlichungstag und Bekanntmachung des Hinweises auf die Patenterteilung: **26.01.2005**
(21) Anmeldenummer: 02740715.4
(22) Anmeldetag: 12.06.2002
(51) Int. Cl.: B62D 11/06

(54) **HYDROSTATISCHER ANTRIEB**
HYDROSTATIC DRIVE
TRANSMISSION HYDROSTATIQUE

(30) Priorität: 13.06.2001 DE 10128589
(43) Veröffentlichungstag der Anmeldung: 10.03.2004
(73) Patentinhaber: Brueninghaus Hydromatik GmbH, 89275 Elchingen (DE)
(72) Erfinder: MOYA, Juan, 72160 Horb (DE); BROCKERHOFF, Rolf, 72187 Waldachtal (DE)
(74) Vertreter: Körfer, Thomas, Dipl.-Phys.
(86) Internationale Anmeldenummer: PCT/EP2002/006469
(87) Internationale Veröffentlichungsnummer: WO 2002/100707

(56) Entgegenhaltungen:
- US-A- 3 795 107

## Beschreibung

Die Erfindung betrifft einen hydrostatischen Antrieb nach Gattung des Hauptanspruchs.

Hydrostatische Antriebe mit mehreren Hydromotoren sind zum Beispiel aus der EP 0 025 372 bekannt. Ein Antriebsmotor treibt dabei eine oder mehrere hydrostatische Pumpen an, welche zum Beispiel als verstellbare Axialkolbenmaschinen ausgeführt sein können, wobei zum Antrieb des Fahrzeugs zumindest zwei Hydromotoren vorgesehen sind. Die Hydromotoren treiben jeweils eine Fahrzeugseite an. Sie sind ebenfalls als verstellbare hydrostatische Maschinen ausgelegt, so daß durch eine Verstellung des Schluckvolumens des Hydromotors einer Fahrzeugseite eine Kurvenfahrt oder Geradeausfahrt einstellbar ist.

Bei solchen Antrieben werden die Hydromotoren der rechten und linken Fahrzeugseite für Geradeausfahrt synchronisiert. Problematisch bei den synchron laufenden Hydromotoren ist der gemeinsame Stelldruck, der zum Synchronisieren der Hydromotoren über getrennt voneinander arbeitende Stellvorrichtungen verwendet wird. Die Regelvorrichtung, welche das erwünschte Gleichlaufen der Hydromotoren bei Geradeausfahrt erzeugt, erzwingt in bestimmten Fahrsituationen, beispielsweise bei Auftreten eines Fahrwiderstandes während einer Kurvenfahrt, daß die Schwenkwinkel beider Hydromotoren in gleicher Richtung verschwenkt werden. Durch die Angleichung des Schluckvolumens der beiden Hydromotoren wird das Fahrzeug jedoch von seiner ursprünglich vorgegebenen Kurvenlinie abgelenkt und eine unerwünschte Geradeausfahrt erzwungen.

Es ist die Aufgabe der vorliegenden Erfindung, einen hydrostatischen Antrieb mit für Geradeausfahrt synchronisierten Hydromotoren zu schaffen, dessen Regelvorrichtung bei einer Laständerung einer beabsichtigten Kurvenfahrt nicht entgegenwirkt.

Die Aufgabe wird durch den erfindungsgemäßen hydrostatischen Antrieb nach Anspruch 1 gelöst.

Vorteilhaft bei dem erfindungsgemäßen hydrostatischen Antrieb ist die Entkopplung zwischen der Synchronisation der beiden Hydromotoren und einer Übersteuervorrichtung bei Änderung des Lastzustandes und einer sich damit einstellenden Druckerhöhung in den Arbeitsleitungen. Zur Synchronisation der beiden Hydromotoren wird dabei mit einer Synchronisationsleitung ein hydraulischer Druck verwendet, der für beide Hydromotoren identisch ist und mit dem der Verstellkolben der Verstellvorrichtung beaufschlagt wird. Für Geradeausfahrt werden die beiden Hydromotoren damit gleichlaufend eingestellt. Als Regelgröße bei einer Kurvenfahrt unter erhöhter Last, zum Beispiel bei Bergauffahrt, wird dagegen ein dem zu verstellenden Hydromotor zugeordneter Druck verwendet um eine Verstellung des Schwenkwinkels zu erreichen. Der Regeleingriff erzwingt somit kein identisches Zurückschwenken beider Hydromotoren und führt nicht zu einer Abweichung von der beabsichtigten Kurvenfahrt.

Durch die in den Unteransprüchen aufgeführten Maßnahmen sind vorteilhafte Weiterbildungen des erfindungsgemäßen hydrostatischen Antriebs möglich.

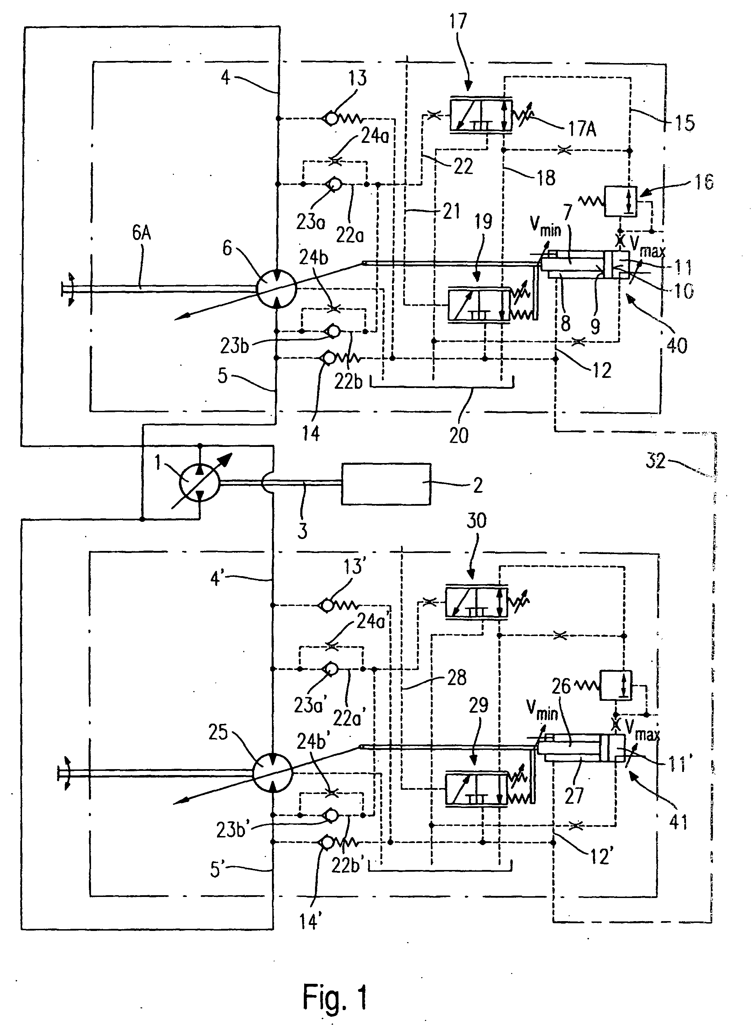

Ein Ausführungsbeispiel eines erfindungsgemäßen hydrostatischen Antriebs ist in der Zeichnung vereinfacht dargestellt und in der nachfolgenden Beschreibung erläutert. Es zeigt
- Fig. 1: einen hydraulischen Schaltplan eines erfindungsgemäßen hydrostatischen Antriebs mit zwei Hydromotoren.

Fig. 1 zeigt schematisch den Aufbau eines Ausführungsbeispiels eines erfindungsgemäßen hydrostatischen Antriebs. Eine Hydropumpe 1 ist verstellbar ausgeführt und für die Förderung eines Druckmittels in beide Richtungen ausgelegt. Die Hydropumpe 1 wird von einem Antriebsmotor 2 angetrieben, der mit der Hydropumpe 1 über eine Antriebswelle 3 verbunden ist.

Die Hydropumpe 1 ist über eine erste Arbeitsleitung 4 und eine zweite Arbeitsleitung 5 mit einem ersten Hydromotor 6 verbunden. In Abhängigkeit der Förderrichtung der Hydropumpe 1 wirken die erste und die zweite Arbeitsleitung 4 und 5 als druck- bzw. saugseitige Arbeitsleitung. Der erste Hydromotor 6 ist zum Beispiel als hydrostatische Axialkolbenmaschine mit einstellbarem Schwenkwinkel ausgeführt. Der erste Hydromotor 6 ist über eine Abtriebswelle 6a mit einer Antriebsvorrichtung einer Fahrzeugseite verbunden, beispielsweise mit Gleisketten oder Rädern. Die Verstellvorrichtung des ersten Hydromotors 6 wird über einen Verstellkolben 7 betätigt. Zur Verstellung des Verstellkolbens 7 wird eine Kraftdifferenz erzeugt, welche durch einen in einem Hochdruckraum 8 auf eine Kolbenringfläche 9 wirkenden Druck, der die Verstellung in Richtung maximales Schluckvolumen Vₘₐₓ drückt, sowie einen in entgegengesetzter Richtung auf eine Kolbenfläche 10 in einem Stelldruckraum 11 wirkenden Stelldruck erzeugt wird.

Die Bedrückung des Hochdruckraums 8 erfolgt über ein Hochdruckleitungssystem 12. Das Hochdruckleitungssystem 12 ist über ein erstes Federrückschlagventil 13 mit der ersten Arbeitsleitung 4 verbunden. Das erste Federrückschlagventil 13 ist ein federvorgespanntes Rückschlagventil, welches in Richtung des Hochdruckleitungssystems 12 öffnet. Die zweite Arbeitsleitung 5 ist über ein zweites Federrückschlagventil 14, welches identisch aufgebaut ist wie das erste Federrückschlagventil 13, ebenfalls mit dem Hochdruckleitungssystem 12 verbunden. Die Zuführung von Druckmittel in den Stelldruckraum 11 erfolgt über eine Stelldruckzuleitung 15. In der Stelldruckzuleitung 15 ist ein Druckreduzierventil 16 angeordnet, welches eine Druckreduzierung des über eine Drossel dem Stelldruckraum 11 zuzuführenden Druckmittels bewirkt. Weiterhin ist der Stelldruckraum 11 über eine weitere Drosselstelle mit einem Tank 20 verbunden.

Ein erstes Druckregelventil 17, welches als 3/2-Wegeventil ausgeführt ist, verbindet in seiner ersten Endstellung, die durch die Kraft einer einstellbaren Druckfeder 17a als Ausgangsstellung definiert ist, eine Stelldruckverbindungsleitung 18 mit der Stelldruckzuleitung 15. Das erste Druckregelventil 17 ist in dieser Position in beide Richtungen durchströmbar. Die Stelldruckverbindungsleitung 18 und die Stelldruckzuleitung 15 sind ferner parallel zu dem durchströmbaren Ventilweg über eine drosselnde Einrichtung miteinander verbunden.

Über ein erstes Steuerdruckventil 19 ist die Stelldruckverbindungsleitung 18 ferner in Richtung eines Tanks 20 entspannbar und damit der Stelldruck in dem Stelldruckraum 11 reduzierbar. In einer zweiten Endposition des ersten Steuerdruckventils 19 wird das Hochdruckleitungssystem 12 mit der Stelldruckverbindungsleitung 18 verbunden, so daß über das erste Druckregelventil 17 und die Stelldruckzuleitung 15 der Stelldruckraum 11 mit dem Druck des Hochdruckleitungssystems 12 bedrückbar ist. Das erste Steuerdruckventil 19 ist ebenfalls als 3/2 Wegeventil ausgeführt, welches stufenlos zwischen seinen beiden Endpositionen einstellbar ist. Die Einstellung des ersten Steuerdruckventils 19 erfolgt über einen durch eine Steuerdruckleitung 21 einer Meßfläche des ersten Steuerdruckventils 19 zugeführten Druck, dem eine Federkraft entgegengerichtet ist, die durch zwei Druckfedern, von denen eine einstellbar ist, erzeugt wird. Die Position der Federlager, welche von dem ersten Steuerdruckventil 17 abgewandt sind, ist dabei abhängig von der Position des Verstellkolbens 7, so daß der Kraft, die durch den Steuerdruck der ersten Steuerdruckleitung 21 an der Meßfläche des Steuerdruckventils 17 erzeugt wird, eine veränderliche Federkraft entgegenwirkt.

Bei einer Erhöhung des Drucks in der Steuerdruckleitung 21 wird das erste Steuerdruckventil 19 in Richtung seiner zweiten Endposition bewegt. Dadurch wird das Hochdruckleitungssystem 12 über das erste Druckregelventil 17 und das Druckreduzierventil 16 mit dem Stelldruckraum 11 des Verstellkolbens 7 verbunden. Der in dem Stelldruckraum 11 und in dem Hochdruckraum 8 wirkende Druck bewegt den Verstellkolben 7 aufgrund der unterschiedlichen Größe der wirksamen Kolbenflächen in Richtung eines kleineren Schwenkwinkels, d. h. kleineren Schluckvolumens Vₘᵢₙ. Die Bewegung des Verstellkolbens 7 verändert die Position der Federlager, so daß dem Druck in der Steuerdruckleitung 21 eine sich vergrößernde Federkraft entgegengerichtet ist. Die Auslenkung des ersten Steuerdruckventils 19 wird bei konstantem Steuerdruck so lange reduziert, bis sich ein Gleichgewichtszustand an dem ersten Steuerdruckventil 19 sowie dem ersten Verstellkolben 7 eingestellt hat.

Für die zweite Fahrzeugseite ist ein identisch aufgebautes System vorgesehen, welches in der ersten Bildhälfte dargestellt ist und in dem ein zweiter verstellbarer Hydromotor 6' mit der Hydropumpe 1 über eine weitere erste Arbeitleitung 4' und eine weitere zweite Arbeitsleitung 5' verbunden ist.

Die beiden weiteren ersten und zweiten Arbeitsleitungen 4' und 5' sind über zwei weitere Federrückschlagventile 13' und 14' mit einem Hochdruckleitungssystem 12' verbunden, wobei das Hochdruckleitungssystem 12 und das Hochdruckleitungssystem 12' durch eine Synchronisationsleitung 32 miteinander verbunden sind. In einem zweiten Hochdruckraum 27 des zweiten Verstellkolbens 26 herrscht damit der gleiche Druck wie in dem Hochdruckraum 8 des Verstellkolbens 7. Die Verbindung der ersten und zweiten Arbeitsleitung 4 und 5 bzw. der weiteren ersten und weiteren zweiten Arbeitsleitung 4' und 5' über Rückschlagventile 23a und 23b, bzw. 23a' und 23b' mit den Hochdruckleitungssystemen 12 bzw. 12', die ihrerseits über die Synchronisationsleitung 32 miteinander verbunden sind, herrscht in den beiden Hochdruckleitungssystemen 12 und 12' ein identischer Druck, der gleich dem höchsten der in den vier Arbeitsleitungen 4, 4', 5 und 5' herrschenden Arbeitsdrücke ist.

Über eine zweite Steuerdruckleitung 28 wird ein zweites Steuerdruckventil 29 an einer Meßfläche mit einem zweiten Steuerdruck beaufschlagt, wobei das zweite Steuerdruckventil 29 in seinem Aufbau identisch mit dem ersten Steuerdruckventil 19 ausgeführt ist. Für Geradeausfahrt herrscht in den Steuerdruckleitungen 21 und 28 ein identischer Steuerdruck. Dadurch kommt es aufgrund der Synchronisationsleitung 32, durch welche der Hochdruckraum 8 mit dem zweiten Hochdruckraum 27 verbunden ist, zu einem synchronen Ansteuern des ersten Hydromotors 6 und des zweiten Hydromotors 25. Das Fahrzeug fährt geradeaus.

Die vorstehende Beschreibung geht davon aus, daß das erste Druckregelventil 17 und ein zweites Druckregelventil 30 sich in einer ersten Endposition befinden. Die Kräfte, welche auf den Verstellkolben 7 bzw. den zweiten Verstellkolben 26 wirken, sind somit durch das erste Steuerdruckventil 19 bzw. das zweite Steuerdruckventil 29 geregelt, da das erste und zweite Druckregelventil 17 und 30 in dieser Position lediglich als Verbindungstücke wirken.

Die Wirkungsweise und Anschlüsse der beiden Druckregelventile 17 und 30 wird im folgenden anhand des ersten Druckregelventils 17 beschrieben. Die Funktion des zweiten Druckregelventils 30 ist analog in Bezug auf den zweiten Hydromotor 25, die weiteren Arbeitsleitungen 4' und 5' und den zweiten Verstellkolben 26.

Das erste Druckregelventil 17 wird durch eine einstellbare Druckfeder 17a in seiner ersten Endposition gehalten. In dieser ersten Endposition verbindet es die Stelldruckverbindungsleitung 18 mit der Stelldruckzuleitung 15, wobei die Verbindung in beide Richtungen durchströmbar ist. In der zweiten Endstellung verbindet das erste Druckregelventil 17 die Stelldruckzuleitung 15 mit dem Tank 20. Der Stelldruckraum 11 kann in dieser zweiten Endposition des ersten Druckregelventils 17 entspannt werden. Das erste Druckregelventil 17 ist zwischen diesen beiden Endpositionen stufenlos einstellbar, wobei zur Einstellung der Ventilposition der Kraft der einstellbaren Druckfeder 17a ein auf eine Meßfläche wirkender Regeldruck entgegengerichtet ist.

Der Regeldruck, der der Meßfläche des ersten Druckregelventils 17 über eine Drosselstelle zugeführt wird, wird über eine Regeldruckzuleitung 22, die sich in zwei parallele Abschnitte 22a und 22b teilt, der ersten oder zweiten Arbeitsleitung 4 oder 5 entnommen. In jedem der beiden parallelen Abschnitte 22a und 22b ist ein Rückschlagventil 23a bzw. 23b angeordnet. Über die beiden Rückschlagventile 23a, 23b ist die erste Arbeitsleitung 4, bzw. die zweite Arbeitsleitung 5 mit der Regeldruckzuleitung 22 verbunden. Auf die Meßfläche des ersten Druckregelventils 17 wirkt somit immer der höhere der beiden Drücke in der ersten Arbeitsleitung 4 bzw. der zweiten Arbeitsleitung 5 als Regeldruck. Zu jedem der beiden Rückschlagventile 23a und 23b ist eine parallele Drosseleinrichtung 24a bzw. 24b vorgesehen.

Durch die Verbindung des ersten Druckregelventils 17 bzw. des zweiten Druckregelventils 30 mit den entsprechenden Arbeitsleitungen 4 und 5 bzw. 4' und 5' über Rückschlagventile 23a und 23b bzw. 23a' und 23b' wird bei Erhöhung des Drucks in der druckseitigen Arbeitsleitung des ersten oder zweiten Hydromotors 6 oder 25 das entsprechende Druckregelventil 17 bzw. 30 in Richtung seiner zweiten Endposition bewegt. Dadurch wird der Stelldruck reduziert und der Verstellkolben 7 wird aufgrund des in dem Hochdruckraum 8 herrschenden Drucks in Richtung eines größeren Schwenkwinkels verstellt.

Soll zum Befahren einer Kurve die Abtriebsdrehzahl beispielsweise des ersten Hydromotors 6 reduziert werden, so wird in der Steuerdruckleitung 21 ein geringerer Druck eingestellt als in der zweiten Steuerdruckleitung 28. Das erste Steuerdruckventil 19 wird damit in Richtung seiner ersten Endposition verstellt, in der der Stelldruckraum 11 in den Tank 20 entspannt wird. Der Verstellkolben 7 bewegt sich damit in Richtung größeren Schwenkwinkels, wodurch die Abtriebsdrehzahl reduziert und das Abtriebsmoment erhöht wird. Der unverändert hohe Druck in der zweiten Steuerdruckleitung 28 sorgt dafür, daß das zweite Steuerdruckventil 29 weiter in Richtung seiner zweiten Endposition eingestellt bleibt. Der Stelldruckraum des zweiten Verstellkolbens 26 wird somit weiterhin aus dem zweiten Hochdruckleitungssystem 12' bedrückt, so daß der zweite Verstellkolben 26 weiter in Richtung kleiner Schwenkwinkel eingestellt bleibt. Entsprechend den unterschiedliche eingestellten Schwenkwinkeln des ersten und zweiten Hydromotors 6 und 25 fährt das Fahrzeug eine Kurve.

Durch Erhöhung des Fahrwiderstandes tritt nur in der druckseitigen Arbeitsleitung 4 oder 5 des Hydromotors 6 mit dem größeren Abtriebsmoment eine Druckerhöhung auf und sorgt demgemäß für eine Ansteuerung des ersten Druckregelventils 17 in Richtung seiner zweiten Endposition. Das zweite Druckregelventil 30, welches mit den zweiten Arbeitsleitungen 4' und 5' verbunden ist, spricht dagegen nicht an und der Schwenkwinkel des zweiten Hydromotors 25 bleibt auf kleinen Winkel eingestellt. Dadurch kann bei einem erfindungsgemäß angetriebenen Fahrzeug die Kurvenfahrt auch dann beibehalten werden, wenn aufgrund einer Fahrwiderstandsänderung das ersten oder zweite Druckregelventil 17 oder 30 anspricht, da dasjenige Druckregelventil 17 oder 30, das zu einer unbeabsichtigten Geradeausfahrt führen würde nicht anspricht.

## Patentansprüche

1. Hydrostatischer Antrieb mit zumindest einer Hydropumpe (1) und einem ersten und einem zweiten über je zwei Arbeitsleitungen (4, 4', 5, 5') mit der Hydropumpe (1) verbundenen Hydromotor (6, 25), deren Schluckvolumen über jeweils eine Verstellvorrichtung (40, 41) einstellbar ist, wobei jeweils ein Hydromotor (6, 25) für einen Antriebsstrang für jeweils eine rechte oder eine linke Fahrzeugseite vorgesehen ist,
**dadurch gekennzeichnet,**
**daß** die Verstellvorrichtungen (40, 41) durch jeweils einen Verstellkolben (7, 26) betätigbar ist, wobei die Verstellkolben (7, 26) beider Hydromotoren (6, 25) mit einer Kraft durch einen gemeinsamen Hochdruck beaufschlagbar sind und der gemeinsame Hochdruck gleich dem höchsten in den Arbeitsleitungen (4, 4', 5, 5') beider Hydromotoren (6, 25) herrschenden Arbeitsdruck ist, und der Kraft jeweils eine Gegenkraft entgegengerichtet ist, die durch einen Stelldruck in einem Stelldruckraum (11, 11') erzeugt wird, und
**daß** der Stelldruckraum (11) des ersten Verstellkolbens (7) des ersten Hydromotors (6) durch ein erstes Druckregelventil (17) gegen einen Tank (20) entspannbar ist und das erste Druckregelventil (17) mit dem jeweils höheren Druck der dem ersten Hydromotor (6) zugeordneten Arbeitsleitungen (4, 5) als Regelgröße beaufschlagt ist und der Stelldruckraum (11') des zweiten Verstellkolbens (27) des zweiten Hydromotors (25) durch ein zweites Druckregelventil (30) gegen den Tank (20) entspannbar ist und das zweite Druckregelventil (30) mit dem jeweils höheren Druck der dem zweiten Hydromotor (25) zugeordneten Arbeitsleitungen (4', 5') als Regelgröße beaufschlagt ist.

2. Hydrostatischer Antrieb nach Anspruch 1,
**dadurch gekennzeichnet,**
**daß** die Druckregelventile (17, 30) als federbelastete, stufenlos regelbare 3/2-Wegeventile ausgeführt sind.

3. Hydrostatischer Antrieb nach Anspruch 2,
**dadurch gekennzeichnet,**
**daß** die Druckregelventile (17, 30) in ihrer Ausgangsposition eine in beide Richtungen durchströmbare Verbindung jeweils eines Steuerdruckventils (19, 29) mit jeweils einem Stelldruckraum (11, 11') herstellen.

4. Hydrostatischer Antrieb nach einem der Ansprüche 1 bis 3,
**dadurch gekennzeichnet,**
**daß** zur Beaufschlagung des ersten bzw. zweiten Druckregelventils (17; 30) mit dem jeweils höheren Druck der Arbeitsleitungen (4, 5; 4', 5') des ersten bzw. zweiten Hydromotors (6; 25) das erste bzw. zweite Druckregelventil (17, 30) mit den Arbeitsleitungen (4, 5; 4', 5') des ersten bzw. zweiten Hydromotors (6; 25) über jeweils ein in Richtung der Druckregelventile (17, 30) öffnendes Rückschlagventil (23a, 23b, 23a', 23b') verbunden ist.

5. Hydrostatischer Antrieb nach Anspruch 4,
**dadurch gekennzeichnet,**
**daß** parallel zu den Rückschlagventilen (23a, 23b, 23a', 23b') jeweils eine Leitung mit einer drosselnden Einrichtung (24a, 24b, 24a', 24b') ausgebildet ist.

6. Hydrostatischer Antrieb nach einem der Ansprüche 1 bis 5,
**dadurch gekennzeichnet,**
**daß** die Stelldrücke über je ein Steuerdruckventil (19; 29) einstellbar ist, dessen Einstellung sich als Kräftegleichgewicht zwischen einer mit einem Steuerdruck beaufschlagten Meßfläche und zumindest einer entgegengesetzt wirkenden Druckfeder ergibt, deren Federkraft mit dem Verstellkolben (7; 26) rückgekoppelt ist.

## Claims

1. Hydrostatic drive having at least one hydraulic pump (1) and a first and a second hydraulic motor (6, 25), which are each connected by two working lines (4, 4', 5, 5') to the hydraulic pump (1) and the absorption volume of which is adjustable in each case by means of an adjusting device (40, 41), wherein in each case one hydraulic motor (6, 25) is provided for a drive train for in each case a right or a left vehicle side,
**characterized in**
**that** the adjusting devices (40, 41) are actuable in each case by means of an adjusting piston (7, 26), wherein the adjusting pistons (7, 26) of both hydraulic motors (6, 25) are loadable with a force by means of a common high pressure and the common high pressure is equal to the highest working pressure prevailing in the working lines (4, 4', 5, 5') of both hydraulic motors (6, 25), and the force is counteracted in each case by a counterforce, which is generated by an actuating pressure in an actuating pressure chamber (11, 11'), and
**that** the actuating pressure chamber (11) of the first adjusting piston (7) of the first hydraulic motor (6) is relievable through a first pressure regulating valve (17) towards a tank (20) and the first pressure regulating valve (17) is loaded with the in each case higher pressure of the working lines (4, 5) associated with the first hydraulic motor (6) as a controlled variable and the actuating pressure chamber (11') of the second adjusting piston (27) of the second hydraulic motor (25) is relievable through a second pressure regulating valve (30) towards the tank (20) and the second pressure regulating valve (30) is loaded with the in each case higher pressure of the working lines (4', 5') associated with the second hydraulic motor (25) as a controlled variable.

2. Hydrostatic drive according to claim 1,
**characterized in**
**that** the pressure regulating valves (17, 30) are designed as spring-loaded, infinitely variable 3/2-way valves.

3. Hydrostatic drive according to claim 2,
**characterized in**
**that** the pressure regulating valves (17, 30) in their initial position establish a connection, through which flow is possible in both directions, of in each case one control pressure valve (19, 29) to in each case one actuating pressure chamber (11, 11').

4. Hydrostatic drive according to one of claims 1 to 3,
**characterized in**
**that**, for loading the first and/or second pressure regulating valve (17; 30) with the in each case higher pressure of the working lines (4, 5; 4', 5') of the first and/or second hydraulic motor (6; 25), the first and/or second pressure regulating valve (17, 30) is connected to the working lines (4, 5; 4', 5') of the first and/or second hydraulic motor (6; 25) in each case by a check valve (23a, 23b, 23a', 23b') opening in the direction of the pressure regulating valves (17, 30).

5. Hydrostatic drive according to claim 4,
**characterized in**
**that** formed parallel to the check valves (23a, 23b, 23a', 23b') there is in each case a line having a throttling device (24a, 24b, 24a', 24b').

6. Hydrostatic drive according to one of claims 1 to 5,
**characterized in**
**that** the actuating pressures are adjustable in each case by means of a control pressure valve (19; 29), the setting of which arises as an equilibrium of forces between a measuring area loaded with a control pressure and at least one oppositely acting compression spring, the spring force of which is fed back by the adjusting piston (7; 26).

## Revendications

1. Transmission hydrostatique comprenant au moins une pompe hydraulique (1) et un premier et un second moteurs hydrauliques (6, 25) reliés par respectivement deux conduites de travail (4, 4', 5, 5') à la pompe hydraulique (1), dont le volume aspiré peut être réglé au moyen d'un dispositif d'ajustage (40, 41) correspondant, un moteur hydraulique (6, 25) étant prévu à chaque fois pour chaque arbre de transmission, respectivement pour un côté droit ou un côté gauche du véhicule,
**caractérisé en ce que**,
les dispositifs de réglage (40, 41) peuvent être actionnés par respectivement un piston de réglage (7, 26) correspondant, les pistons de réglage (7, 26) des deux moteurs hydrauliques (6, 25) pouvant être alimentés avec une force par une pression élevée commune et la pression élevée commune étant égale à la plus haute pression de travail régnant dans les conduites de travail (4, 4', 5, 5') des deux moteurs hydrauliques (6, 25) et à chaque fois une force antagoniste, qui est générée par une pression de commande dans un compartiment de pression de commande (11, 11'), étant orientée à chaque fois dans le sens contraire à la force, et
**en ce que** le compartiment de pression de commande (11) du premier piston de réglage (7) du premier moteur hydraulique (6) peut être délesté par une première vanne de réglage de pression (17) par rapport à un réservoir (20) et **en ce que** la première vanne de réglage de pression (17) est alimentée avec la pression correspondante plus élevée des conduites de travail (4, 5), attribuées au premier moteur hydraulique (6), comme grandeur de réglage et le compartiment de pression de commande (11') du second piston de réglage (27) du second moteur hydraulique (25) peut être délesté par une seconde vanne de réglage de pression (40) par rapport à la citerne (20) et la seconde vanne de réglage pression (30) est alimentée avec la pression correspondante plus élevée des conduites de travail (4', 5') attribuées au second moteur hydraulique (25) comme grandeur de réglage.

2. Transmission hydrostatique selon la revendication 1,
**caractérisé en ce que**
les vannes de réglage de pression (17, 30) sont conçues comme des vannes à 3/2 voies sollicitées par ressort et pouvant être réglées de façon progressive.

3. Transmission hydrostatique selon la revendication 2,
**caractérisé en ce que**
les vannes de réglage de pression (17, 30) établissent dans leur position de départ une liaison, pouvant être parcourue dans les deux sens, d'une vanne de pression de commande (19, 29) avec un compartiment de pression de commande (11, 11') correspondant.

4. Transmission hydrostatique selon l'une quelconque des revendications 1 à 3,
**caractérisé en ce que**,
pour l'alimentation de la première et de la seconde vannes de réglage de pression (17 ; 30) avec la pression correspondante plus élevée des conduites de travail (4, 5 ; 4', 5') du premier et du second moteurs hydrauliques (6 ; 25), la première et la seconde vannes de réglage de pression (17, 30) sont reliées avec les conduites de travail (4, 5 ; 4', 5') du premier et du second moteurs hydrauliques (6 ; 25) au moyen d'une vanne antiretour (23a, 23b, 23a', 23b') ouvrant en direction des vannes de réglage de pression (17, 30).

5. Transmission hydrostatique selon la revendication 4,
**caractérisé en ce**
**qu'**une conduite avec un dispositif d'étranglement (24a, 24b, 24a', 24b') est conçu parallèlement aux vannes antiretour (23a, 23b, 23a', 23b').

6. Transmission hydrostatique selon l'une quelconque des revendications 1 à 5,
**caractérisé en ce que**
les pressions de commande peuvent être réglées au moyen d'une vanne de pression de commande (19 ; 29), dont le réglage est obtenu comme équilibre de force entre une surface de mesure alimentée avec une pression de commande et au moins un ressort de pression agissant en sens inverse, dont la force de ressort est réinjectée avec le piston de réglage (7 ; 26).
